# EUROPEAN PATENT SPECIFICATION

(11) **EP 2 552 137 B1**
(45) Date of publication and mention of the grant of the patent: **19.09.2018**
(21) Application number: 10848213.4
(22) Date of filing: 10.06.2010
(51) Int. Cl.: H04L 29/06, H04N 7/14, H04M 1/725, H04W 4/12

(54) **METHOD AND TERMINAL FOR SENDING A PROMPT**
VERFAHREN UND ENDGERÄT ZUM SENDEN EINES BEDIENHINWEISES
PROCÉDÉ ET TERMINAL DESTINÉS À ENVOYER UNE INDICATION D'INSTRUCTION

(30) Priority: 25.03.2010 CN 201010140437
(43) Date of publication of application: 30.01.2013
(73) Proprietor: ZTE Corporation, Shenzhen, Guangdong 518057 (CN)
(72) Inventor: XUE, Tao, Guangdong 518057 (CN)
(74) Representative: Novagraaf Technologies
(86) International application number: PCT/CN2010/073759
(87) International publication number: WO 2011/116551

(56) References cited:
- EP-A1- 1 524 870
- EP-A2- 1 231 798
- CN-A- 1 496 180
- CN-A- 1 525 786
- CN-A- 1 852 336
- CN-A- 101 001 286
- US-B1- 6 665 376
- ROSENBERG DYNAMICSOFT H SCHULZRINNE COLUMBIA UNIVERSITY P KYZIVAT CISCO SYSTEMS J: "Indicating User Agent Capabilities in the Session Initiation Protocol (SIP); rfc3840.txt", 20040801, 1 August 2004 (2004-08-01), XP015009618, ISSN: 0000-0003
- Anonymous: "Peer-to-peer SIP - Wikipedia, the free encyclopedia", , 29 January 2010 (2010-01-29), XP055297961, Retrieved from the Internet: URL:https://en.wikipedia.org/w/index.php?t itle=Peer-to-peer_SIP&oldid=340754700 [retrieved on 2016-08-26]

## Description

### Field of the Invention

The present invention relates to the communication field, and in particular to a method for sending prompt information and a terminal.

### Background of the Invention

Videophone belongs to the scope of multimedia communication and is a video communication conference system with extensive application field, and people can view the image of the peer during communication. It is not only suitable for household life and also can be extensively applied in various fields of different industries such as diverse business activities, remote education, confidential monitoring, hospital nursing, medical diagnosis, scientific expedition and so on, therefore it has extremely broad market prospect.

During currently available videophone call, the following usage scenario often occurs: before recording the peer video, it often needs to prompt the peer that the peer video will soon be recorded. Currently available prompt method is to prompt the peer that the video will soon be recorded by sending a frame of image with prompt text picture to the peer and also to prompt that the recording is finished by sending a frame of image with prompt text picture to the peer when the recording is ended.

The inventors have found that in the above scenario, if the language modes of the calling and called terminals are inconsistent, it will cause the peer unable to understand the meaning of the prompt information when displaying the prompt information to the peer during the videophone call, so the user experience is not good.

Patent publication US 6 665 376 B1 (BROWN BARRY D [US]) (2003-12-16) discloses a system intermediary to a calling and called party, wherein the system requests a called party to select a prompt language.

### Summary of the Invention

The present invention provides a method for sending prompt information and a mobile phone terminal to at least solve the above problem.

A method for sending prompt information according to independent claim 1 is provided according to one aspect of the present invention.

A mobile phone terminal according to independent claim 7 is provided according to another aspect of the present invention.

Further advantageous aspects of the invention are set out in the dependent claims.

With the present invention, the problem, that corresponding language type prompt cannot be carried out according to the language type of the communication peer system during video communications such as videophone and so on, is solved. It is achieved to send a video frame of the language type corresponding to the communication peer, so that the prompt between mobile phone terminals with different system languages can switch automatically and the peer can be prompted by selecting corresponding prompt information according to the language type of the peer during video communications such as videophone and so on, greatly improving the availability of the mobile phone terminal and the user experience.

### Brief Description of the Drawings

The drawings illustrated here provide a further understanding of the present invention and form a part of the present application. The exemplary embodiments and the description thereof are used to explain the present invention without unduly limiting the scope of the present invention, wherein:
Fig. 1 is a flowchart of a method for sending prompt information.
Fig. 2 is a preferred flowchart of a method for sending prompt information.
Fig. 3 is a flowchart of system prompt information exchange between terminals in a videophone.
Fig. 4 is a flowchart of system prompt information automatic exchange between terminals in a videophone.
Fig. 5 is a structural block diagram of a terminal.
Fig. 6 is a structural block diagram of a terminal.
Fig. 7 is a structural block diagram of a terminal.

### Detailed Description of Embodiments

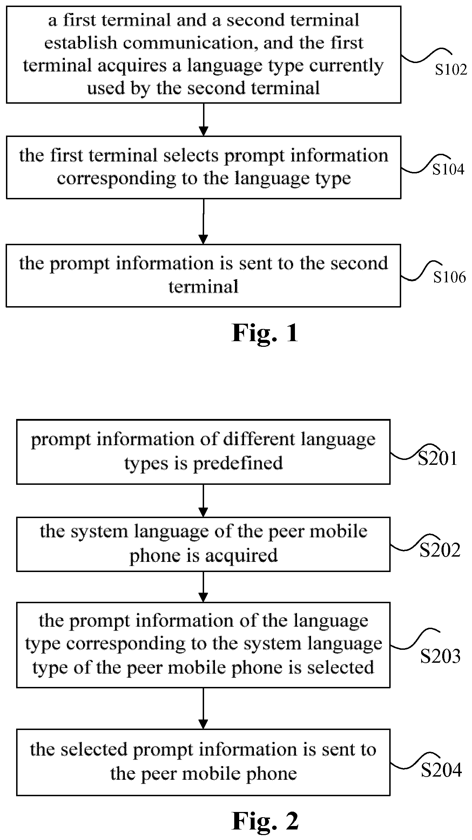

The present invention will be explained in detail hereinafter in conjunction with the drawings and the embodiments. What needs to be explained is, if there is no conflict, the embodiments of the present invention and the characters in it can be combined with each other. Fig. 1 is a flowchart of a method for sending prompt information, and as shown in Fig. 1, it comprises the following steps S102 to S106.
Step S102, a first terminal and a second terminal establish communication, and the first terminal acquires a language type currently used by the second terminal.
Step S104, the first terminal selects prompt information corresponding to the language type.
Step S106, the prompt information is sent to the second terminal. In relevant art, during communications such as videophone and so on, if the language modes of the first terminal and the second terminal are inconsistent, it will cause the second terminal unable to understand the prompt information sent by the first terminal. In the embodiments of the present invention, the language type currently used by the second terminal can be understood by the second terminal, and the current language type of the communication peer is acquired by step S102. In step S104, corresponding prompt information can be selected according to the language type of the peer. In step S106, the prompt information of the language type corresponding to the communication peer is sent out. It can be ensured that the second terminal understands this prompt information, thus the availability of the terminal and the user experience are greatly improved.

Preferably, before step S104, the above method further comprises: the first terminal presetting prompt information of all the language types; or a user of the first terminal inputting the prompt information of all the language types into the first terminal.

For example, predefined prompt information of different language types can be prompt information strings of different language types prefabricated in a mobile phone system and can also be prompt information of different language types inputted into the mobile phone by the mobile phone user by himself/herself.

Preferably, the first terminal acquiring the language type of the second terminal in step S102 comprises: the first terminal sending a language type request message for requesting the language type and receiving a language type message carrying the language type sent by the second terminal in responsive to the language type request message; or the first terminal receiving the language type message carrying the language type actively sent by the second terminal. That is, acquiring the system language of the peer mobile phone can be of the mode of sending a request to the peer mobile phone for requesting the peer mobile phone to acquire the current system language and waiting for the response of the peer mobile phone and can also be of the mode of both of them sending their own current system languages to one another.

Fig. 2 is a flowchart of a method for sending prompt information, and as shown in Fig. 2, it comprises the following steps S201 to S204.
Step S201, prompt information of different language types is predefined.
Step S202, the system language of the peer mobile phone is acquired.
Step S203, the prompt information of the language type corresponding to the system language type of the peer mobile phone is selected.
Step S204, the selected prompt information is sent to the peer mobile phone.

With the above steps, prompting the peer by selecting corresponding prompt information according to the language type of the peer is achieved, which greatly improves the availability of the terminal and the user experience.

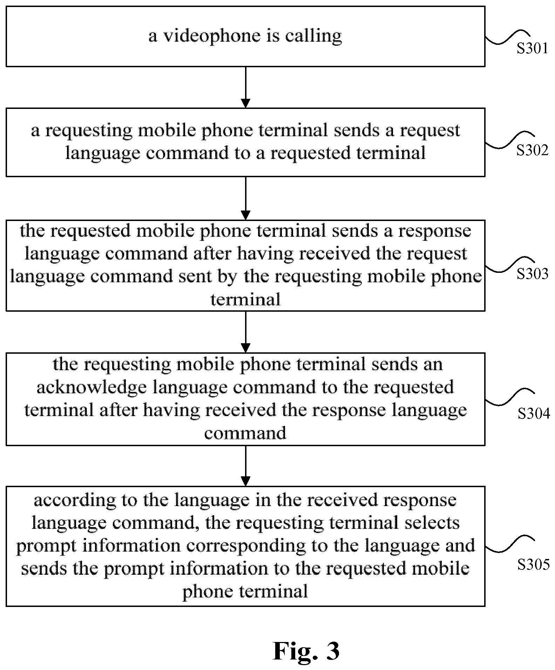

Fig. 3 is a flowchart of system prompt information exchange between terminals in a videophone communication, and as shown in Fig. 3, it comprises the following steps S301 to S305.
Step S301, a videophone is calling.
Step S302, a requesting mobile phone terminal sends a request language command (language type request message) to a requested terminal.

Preferably, in step S302, after the requesting mobile phone terminal sends the request language command, a timer can be set. If a response language command is received before the timer is overtime, then this timer can be stopped, and if the timer is overtime, the request language command can be selected to resend. A count maximum can be preset, when the counting of this resending process reaches the maximum, the resending will be stopped.

Step S303, the requested mobile phone terminal sends a response language command after having received the request language command sent by the requesting mobile phone terminal and notifies the requesting mobile phone terminal of current system prompt information of the requested mobile phone.

Preferably, after the requested mobile phone terminal sends the response language command (language type message), a timer can be set, if an acknowledge language command is received before this timer is overtime, then this timer can be stopped, and if the timer is overtime, then the response language command can be selected to resend. This resending process can be counted to a maximum, and when the counting reaches the maximum, the resending will be stopped.

Step S304, the requesting mobile phone terminal sends an acknowledge language command (acknowledge language message) to the requested terminal after having received the response language command.

Preferably, step S304 can also be omitted, and in this situation, the timer in step S303 may also not be set.

Step S305, according to the language in the received response language command, the requesting terminal selects prompt information corresponding to the language and sends the prompt information to the requested mobile phone terminal.

Preferably, selecting prompt information corresponding to the language can carry out corresponding operations according to the particular service. For example, prompt information is sent to the peer mobile phone at the beginning and ending of the video during the videophone; and prompt information for beginning to monitor is sent to the monitoring end when a circuit domain videophone is used to monitor the video, and so on.

Preferably, the request language command, the response language command and the acknowledge language command in the above steps can be implemented by using the user input indication (abbreviated as UII) in the H.245 message.

Table 1 is a command table of various prompt information, and Table 1 only gives out a command list with one encoding, here only several of them are listed for reference.

**Table 1 Command list of prompt information**

| Language encoding | Language name |
|---|---|
| ZHCN | Simplified Chinese |
| ZHTW | Traditional Chinese |
| EN | English |
| FR | French |
| GE | German |

Table 2 is a command list of requesting and responding to the prompt information of current system of the mobile phone terminal.

**Table 2 Encoding command list**

| Command encoding | Command name |
|---|---|
| REQ_LAN | Request language command |
| RES_LAN | Response language command |
| ACK_LAN | Acknowledge language command |

The request language command is REQ_LAN indicating to request the current system language of the peer mobile phone.

The response language command indicates to respond to the command for requesting the current system language sent from the requesting mobile phone terminal and notify the peer of the current system language of the present mobile phone terminal. This command is encoded by virtue of the following two modes:
Mode I: that is, "RES_LAN" is used and then the language encoding specified in Table 1 is added, for example, the response language command of simplified Chinese is: RES_LAN: ZHCN, and the response language command of English is: RES_LAN: EN.
Mode II: the language encoding specified in Table 1 is directly used as the response language command for sending, for example, the response language command of simplified Chinese is: ZHCN, and the response language command of English is: EN. The acknowledge language command is ACK_LAN for notifying the requested terminal that the response language command sent from the requested terminal has been received, and the requesting terminal may also not need to send an acknowledge language command to the requested terminal.

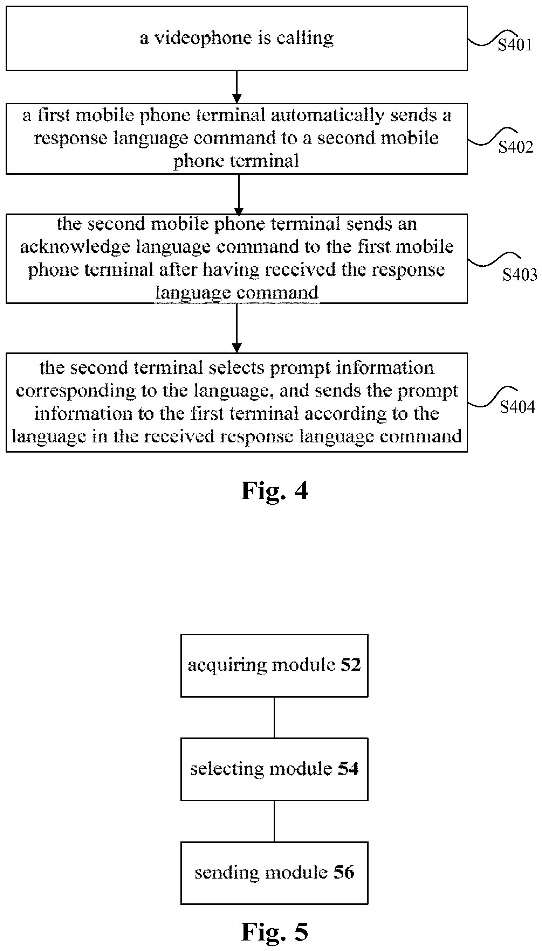

Fig. 4 is a flowchart of system prompt information automatic exchange between terminals in a videophone, and as shown in Fig. 4, it comprises the following steps S401 to S404.
Step S401, a videophone is calling.
Step S402, a first mobile phone terminal automatically sends a response language command to a second mobile phone terminal.

Preferably, step S402 can start at the time of establishing the videophone call, or can be performed before a corresponding service which needs to display prompt information during the videophone call.

Step S403, the second mobile phone terminal sends an acknowledge language command to the first mobile phone terminal after having received the response language command.

Preferably, step S403 can also be omitted.

Step S404, the second terminal selects prompt information corresponding to the language, and sends the prompt information to the first terminal according to the language in the received response language command.

Preferably, selecting prompt information corresponding to the language in step S404 can carry out corresponding operations according to the particular service. For example, prompt information is sent to the peer mobile phone at the beginning and ending of the video during the videophone; and prompt information for beginning to monitor is sent to the monitoring end when a circuit domain videophone is used to monitor the video, and so on.

Preferably, the above response language command and the acknowledge language command can be implemented by using the user input indication (abbreviated as UII) in the H.245 message.

Preferably, the above response language command and the acknowledge language command can use the encoding format in Tables 1 and 2.

Fig. 5 is a structural block diagram of a terminal, and as shown in Fig. 5, the terminal comprises: an acquiring module **52**, a selecting module **54**, and a sending module **56**. The above structures will be described in detail hereinafter.

The acquiring module **52** is configured to acquire a language type currently used by a communication peer; the selecting module **54**, coupled to the acquiring module **52**, is configured to select corresponding prompt information acquired by the acquiring module **52** according to the language type; and the sending module **56**, coupled to the selecting module **54**, is configured to send the prompt information selected by the selecting module **54** to the communication peer.

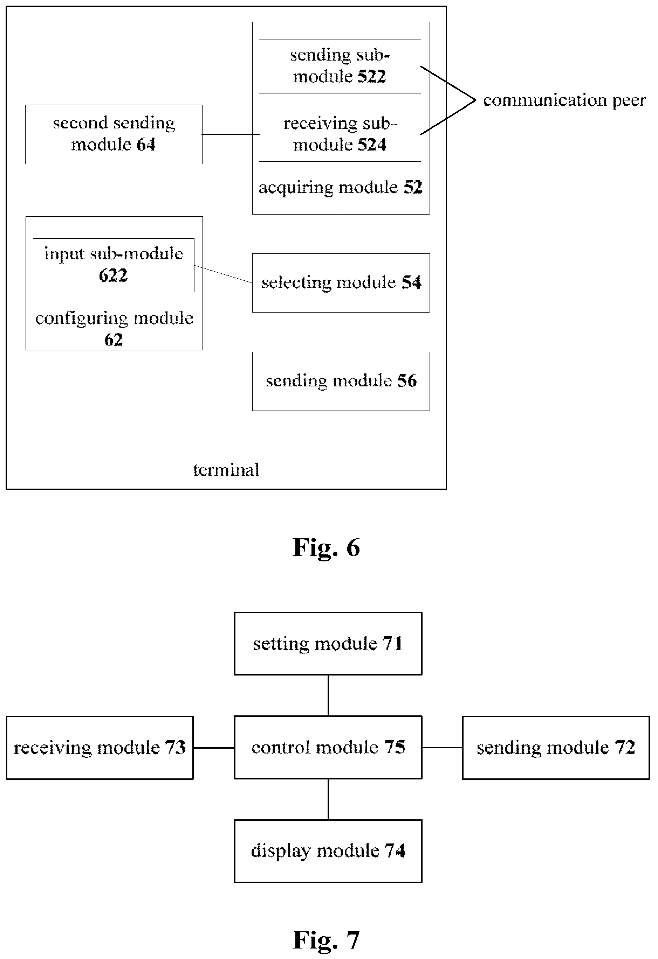

Fig. 6 is a preferred structural block diagram of the terminal, and as shown in Fig. 6, the terminal further comprises a configuring module **62**, an input sub-module **622** and a second sending module **64**, and the above acquiring module **52** comprises a sending sub-module **522** and a receiving sub-module **524**. The above structures will be described in detail hereinafter.

The configuring module **62**, coupled to the selecting module **54**, is configured to preset the prompt information of all the language types so that the selecting module **54** selects a corresponding prompt information; and the input sub-module **622**, coupled to the selecting module **54,** is configured to input the prompt information of all the language types so that the selecting module **54** selects a corresponding prompt information.

The sending sub-module **522** is configured to send a language type request message for requesting a language type; and the receiving sub-module **524**, coupled to the sending sub-module **522**, is configured to receive a language type message carrying the language type sent from the communication peer. The second sending module **64**, coupled to the receiving sub-module **524**, is configured to send an acknowledge language message for acknowledging that the language type message is received to the communication peer after the receiving sub-module **524** has received the language type message carrying the language type sent from the communication peer.

Fig. 7 is a structural block diagram of the terminal, and as shown in Fig. 7, it comprises a setting module **71**, a sending module **72**, a receiving module **73**, a display module **74** and a control module **75**, and hereinafter the above structures will be described in detail.

The setting module **71** is configured to set prompt information of different language types; the sending module **72**, coupled to the control module **75**, is configured to send a command for requesting the current system language of the peer mobile phone, or to send a command of the current system language to the peer mobile phone; the receiving module **73**, coupled to the control module **75**, is configured to receive the command for the peer mobile phone requesting the current system language of current mobile phone, or to receive the command of the current system language of the peer mobile phone sent from the peer mobile phone; the display module **74**, coupled to the control module **75**, is configured to display corresponding prompt information; the control module **75**, coupled to the sending module **72**, the receiving module **73**, and the display module **74**, is configured to control the sending module **72** and receiving module **73** to send and receive a corresponding command, to control the display module **74** to display, and to control the setting module to set.

What needs to be explained is, the module composition diagram can be widely applied in various types of terminal devices, such as mobile phone, desktop telephone, etc.

What needs to be explained is, the terminal described in the apparatus embodiments is corresponding to the above method embodiments, and its particular implementing method has been described in detail in the method embodiments, which will not be described here unnecessarily.

It can be seen from the above description that the present invention can conveniently achieve the function of automatically selecting prompt information between mobile phone terminals and makes the best use of the simplicity and being easy for modification of the user terminal software upgrading, and the telecoms operators only need to carry out suitable modification on the user terminal software (adding a corresponding service software module) to achieve the function of automatically selecting prompt information between mobile phone terminals.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alternations and changes to the present invention are apparent to those skilled in the art. The scope of the invention is defined by the claims.

## Claims

1. A method for sending prompt information, comprising:
a first mobile phone terminal and a second mobile phone terminal establishing a video communication;
the first mobile phone terminal acquiring a current system language of the second mobile phone terminal;
wherein the first mobile phone terminal acquiring the current system language of the second mobile phone terminal comprises:
the first mobile phone terminal sending a language type request message for requesting the current system language to the second mobile phone terminal and receiving a language type message carrying the current system language sent by the second mobile phone terminal in response to the language type request message; or
the first mobile phone terminal receiving the language type message carrying the current system language of the second mobile phone terminal, wherein said language type message is actively sent by the second mobile phone terminal,
and the first mobile phone terminal selecting a corresponding prompt information according to the current system language of the second mobile phone and sending the prompt information to the second mobile phone terminal.

2. The method according to claim 1, wherein before the first mobile phone terminal acquiring the current system language of the second mobile phone terminal, the method further comprises:
the first mobile phone terminal presetting prompt information of all the current system languages.

3. The method according to claim 2, wherein the first mobile phone terminal presetting the prompt information of all the current system languages comprises:
a user of the first mobile phone terminal inputting the prompt information of all the current system languages into the first mobile phone terminal.

4. The method according to claim 1, wherein after the first mobile phone terminal sending a language type request message, the method further comprises:
the first mobile phone terminal resending the language type request message in the situation that the language type message is not received within a preset time period.

5. The method according to claim 1, wherein after the first mobile phone terminal receiving the language type message, the method further comprises:
the first mobile phone terminal sending to the second mobile phone terminal an acknowledge language message for acknowledging that the language type message is received.

6. The method according to claim 5, wherein the language type request message, the language type message and the acknowledge language message are implemented by the H.245 protocol.

7. A mobile phone terminal, comprising:
an acquiring module, configured to acquire a current system language of a video communication peer mobile phone terminal;
a selecting module, configured to select corresponding prompt information according to the current system language; and
a sending module, configured to send the prompt information to the video communication peer mobile phone terminal;
wherein the acquiring module comprises:
a sending sub-module, configured to send a language type request message for requesting the current system language of the peer mobile phone terminal; and
a receiving sub-module, configured to receive a language type message carrying the current system language sent by the video communication peer mobile phone terminal.

8. The mobile phone terminal according to claim 7, wherein
the mobile phone terminal further comprises:
a configuring module, configured to preset prompt information of all the current system languages; and
the configuring module comprises:
an input sub-module, configured to input the prompt information of all the current system languages.

9. The mobile phone terminal according to claim 7, further comprising:
a second sending module, configured to send to the video communication peer mobile phone terminal an acknowledge language message for acknowledging that the language type message is received.

## Patentansprüche

1. Verfahren zum Senden von Hinweisinformationen, umfassend:
Aufbauen einer Videokommunikation durch ein erstes Mobiltelefon-Endgerät und ein zweites Mobiltelefon-Endgerät;
Erfassen einer aktuellen Systemsprache des zweiten Mobiltelefon-Endgeräts durch das erste Mobiltelefon-Endgerät;
wobei das Erfassen der aktuellen Systemsprache des zweiten Mobiltelefon-Endgeräts durch das erste Mobiltelefon-Endgerät umfasst:
Senden einer Sprachtyp-Abfragenachricht zum Abfragen der aktuellen Systemsprache durch das erste Mobiltelefon-Endgerät an das zweite Mobiltelefon-Endgerät, und Empfangen einer vom zweiten Mobiltelefon-Endgerät in Antwort auf die Sprachtyp-Abfragenachricht gesendeten Sprachtyp-Nachricht, die die aktuelle Systemsprache übermittelt; oder
Empfangen, durch das erste Mobiltelefon-Endgerät, der die aktuelle Systemsprache des zweiten Mobiltelefon-Endgeräts übermittelnden Sprachtyp-Nachricht, wobei die Sprachtyp-Nachricht vom zweiten Mobiltelefon-Endgerät aktiv gesendet wird,
und Auswählen, durch das erste Mobiltelefon-Endgerät, einer entsprechenden Hinweisinformation gemäß der aktuellen Systemsprache des zweiten Mobiltelefons und Senden der Hinweisinformation an das zweite Mobiltelefon-Endgerät.

2. Verfahren nach Anspruch 1, wobei bevor das erste Mobiltelefon-Endgerät die aktuelle Systemsprache des zweiten Mobiltelefon-Endgeräts erfasst, das Verfahren weiter umfasst:
Voreinstellen, durch das erste Mobiltelefon-Endgerät, von Hinweisinformationen aller der aktuellen Systemsprachen.

3. Verfahren nach Anspruch 2, wobei das Voreinstellen der Hinweisinformationen aller der aktuellen Systemsprachen durch das erste Mobiltelefon-Endgerät umfasst:
Eingeben, durch einen Benutzer des ersten Mobiltelefon-Endgeräts, der Hinweisinformationen aller der aktuellen Systemsprachen in das erste Mobiltelefon-Endgerät.

4. Verfahren nach Anspruch 1, wobei nach Senden einer Sprachtyp-Abfragenachricht durch das erste Mobiltelefon-Endgerät das Verfahren weiter umfasst:
erneutes Senden der Sprachtyp-Abfragenachricht durch das erste Mobiltelefon-Endgerät in der Situation, édass die Sprachtyp-Nachricht nicht innerhalb eines voreingestellten Zeitraums empfangen wird.

5. Verfahren nach Anspruch 1, wobei nach Empfangen der Sprachtyp-Nachricht durch das erste Mobiltelefon-Endgerät das Verfahren weiter umfasst:
Senden einer Sprachbestätigungsnachricht durch das erste Mobiltelefon-Endgerät an das zweite Mobiltelefon-Endgerät zum Bestätigen, dass die Sprachtyp-Nachricht empfangen wurde.

6. Verfahren nach Anspruch 5, wobei die Sprachtyp-Abfragenachricht, die Sprachtyp-Nachricht und die Sprachbestätigungsnachricht über das H.245-Protokoll implementiert werden.

7. Mobiltelefon-Endgerät, umfassend:
ein Erfassungsmodul, das dazu konfiguriert ist, eine aktuelle Systemsprache eines Videokommunikationspartner-Mobiltelefon-Endgeräts zu erfassen;
ein Auswahlmodul, das dazu konfiguriert ist, entsprechende Hinweisinformationen gemäß der aktuellen Systemsprache auszuwählen; und
ein Sendemodul, das dazu konfiguriert ist, die Hinweisinformationen an das Videokommunikationspartner-Mobiltelefon-Endgerät zu senden;
wobei das Erfassungsmodul umfasst:
ein Sende-Submodul, das dazu konfiguriert ist, eine Sprachtyp-Abfragenachricht zum Abfragen der aktuellen Systemsprache des Partner-Mobiltelefon-Endgeräts zu senden; und
ein Empfangs-Submodul, das dazu konfiguriert ist, eine vom Videokommunikationspartner-Mobiltelefon-Endgerät gesendete Sprachtyp-Nachricht zu empfangen, die die aktuelle Systemsprache übermittelt.

8. Mobiltelefon-Endgerät nach Anspruch 7, wobei
das Mobiltelefon-Endgerät weiter umfasst:
ein Konfigurationsmodul, das dazu konfiguriert ist, Hinweisinformationen aller der aktuellen Systemsprachen voreinzustellen; und
das Konfigurationsmodul umfasst:
ein Eingabe-Submodul, das dazu konfiguriert ist, die Hinweisinformationen aller der aktuellen Systemsprachen einzugeben.

9. Mobiltelefon-Endgerät nach Anspruch 7, weiter umfassend:
ein zweites Sendemodul, das dazu konfiguriert ist, eine Sprachbestätigungsnachricht zum Bestätigen, dass die Sprachtyp-Nachricht empfangen wurde, an das Videokommunikationspartner-Mobiltelefon-Endgerät zu senden.

## Revendications

1. Procédé pour envoyer des informations d'instruction, comprenant :
l'établissement, par un premier terminal téléphonique mobile et un second terminal téléphonique mobile, d'une communication vidéo ;
l'acquisition, par le premier terminal téléphonique mobile, d'un langage système actuel du second terminal téléphonique mobile ;
dans lequel l'acquisition, par le premier terminal téléphonique mobile, du langage système actuel du second terminal téléphonique mobile comprend :
l'envoi d'un message de demande de type de langage pour demander le langage système actuel au second terminal téléphonique mobile et la réception d'un message de type de langage transportant le langage système actuel envoyé par le second terminal téléphonique mobile en réponse au message de demande de type de langage, par le premier terminal téléphonique mobile ; ou
la réception, par le premier terminal téléphonique mobile, du message de type de langage transportant le langage système actuel du second terminal téléphonique mobile, dans lequel ledit message de type de langage est activement envoyé par le second terminal téléphonique mobile et la sélection des informations d'instruction correspondantes selon le langage système actuel du second mobile phone et l'envoi des informations d'instruction au second terminal téléphonique mobile, par le premier terminal téléphonique mobile.

2. Procédé selon la revendication 1, dans lequel, avant l'acquisition, par le premier terminal téléphonique mobile, du langage système actuel du second terminal téléphonique mobile, le procédé comprend en outre :
la prédéfinition, par le premier terminal téléphonique mobile, des informations d'instruction de tous les langages système actuels.

3. Procédé selon la revendication 2, dans lequel la prédéfinition, par le premier terminal téléphonique mobile, des informations d'instruction de tous les langages système actuels comprend :
l'entrée, par un utilisateur du premier terminal téléphonique mobile, des informations d'instruction de tous les langages système actuels dans le premier terminal téléphonique mobile.

4. Procédé selon la revendication 1, dans lequel, après l'envoi, par le premier terminal téléphonique mobile, d'un message de demande de type de langage, le procédé comprend en outre :
l'envoi de nouveau, par le premier terminal téléphonique mobile, du message de demande de type de langage dans la situation dans laquelle le message de type de langage n'est pas reçu au bout d'une période de temps prédéfinie.

5. Procédé selon la revendication 1, dans lequel, après la réception, par le premier terminal téléphonique mobile, du message de type de langage, le procédé comprend en outre :
l'envoi, par le premier terminal téléphonique mobile, au second terminal téléphonique mobile d'un message de langage acquitté pour acquitter la réception du message de type de langage.

6. Procédé selon la revendication 5, dans lequel le message de demande de type de langage, le message de type de langage et le message de langage acquitté sont mis en oeuvre par le protocole H.245.

7. Terminal téléphonique mobile, comprenant :
un module d'acquisition, configuré pour acquérir un langage système actuel d'un terminal téléphonique mobile pair de communication vidéo ;
un module de sélection, configuré pour sélectionner des informations d'instruction correspondantes selon le langage système actuel ; et
un module d'envoi, configuré pour envoyer les informations d'instruction au terminal téléphonique mobile pair de communication vidéo ;
dans lequel le module d'acquisition comprend :
un sous-module d'envoi, configuré pour envoyer un message de demande de type de langage pour demander le langage système actuel du terminal téléphonique mobile pair ; et
un sous-module de réception, configuré pour recevoir un message de type de langage transportant le langage système actuel envoyé par le terminal téléphonique mobile pair de communication vidéo.

8. Terminal téléphonique mobile selon la revendication 7, dans lequel
le terminal téléphonique mobile comprend en outre :
un module de configuration, configuré pour prédéfinir des informations d'instruction de tous les langages système actuels ; et
le module de configuration comprend :
un sous-module d'entrée, configuré pour entrer les informations d'instruction de tous les langages système actuels.

9. Terminal téléphonique mobile selon la revendication 7, comprenant en outre :
un second module d'envoi, configuré pour envoyer au terminal téléphonique mobile pair de communication vidéo un message de langage acquitté pour acquitter la réception du message de type de langage.
